# FASCICULE DE BREVET EUROPEEN

(11) **EP 3 749 444 B1**
(45) Date de publication et mention de la délivrance du brevet: **04.05.2022**
(21) Numéro de dépôt: 19702099.3
(22) Date de dépôt: 04.02.2019
(51) Int. Cl.: B01J 8/24

(54) **DISPOSITIF D'INJECTION DE CHARGE D'UNE UNITE FCC DONT LA SECTION TRANSVERSALE EST AUGMENTEE LOCALEMENT**
VORRICHTUNG ZUR INJEKTION EINES AUSGANGSSTOFFES EINER FCC-EINHEIT MIT LOKAL GRÖSSEREM QUERSCHNITT
FEEDSTOCK INJECTION DEVICE OF AN FCC UNIT, HAVING A LOCALLY LARGER CROSS-SECTION

(30) Priorité: 08.02.2018 FR 1851067
(43) Date de publication de la demande: 16.12.2020
(73) Titulaire: TotalEnergies Raffinage Chimie, 92400 Courbevoie (FR)
(72) Inventeur: LESAGE, Romain, 2000 ANTWERPEN (BE); DECKER, Sébastien, 76930 Octeville sur Mer (FR); RABOIN, Jean-Christophe, 41600 CHAUMONT SUR THARONNE (FR); KERNEUR, Youen, 76620 LE HAVRE (FR)
(74) Mandataire: Raboin, Jean-Christophe
(86) Numéro de dépôt international: PCT/EP2019/052594
(87) Numéro de publication internationale: WO 2019/154747

(56) Documents cités:
- WO-A1-2015/170034

## Description

La présente invention se rapporte à un dispositif d'injection, notamment un dispositif d'injection de charge d'hydrocarbures d'une unité de raffinage, en particulier une unité de craquage catalytique fluide (FCC « Fluid Catalytic Cracking » en anglais).

Les charges d'hydrocarbures liquides traitées dans les unités de raffinage sont généralement mises en contact avec un catalyseur solide qui va favoriser la ou les réactions chimiques de traitement de la charge. Afin d'améliorer ce contact et de maximiser le rendement des réactions, ces charges d'hydrocarbures liquides sont atomisées en fines gouttelettes par des dispositifs d'injection. Cette d'atomisation permet de maximiser la surface de contact liquide (charge d'hydrocarbures liquide) -solide (catalyseur), ce qui favorise le transfert de chaleur et donc la vaporisation de ces hydrocarbures qui réagissent alors en phase gazeuse au contact du solide (catalyseur). Bien qu'il n'existe pas de réel consensus concernant le diamètre optimum des gouttelettes, on recherche en général à former des gouttelettes dont le diamètre est du même ordre de grandeur que le diamètre des particules de catalyseur, à savoir moins de 200 microns, par exemple de l'ordre de 50 à 80 microns.

De manière générale, on utilise des dispositifs d'injection dits « diphasiques », lesquels présentent un corps creux globalement cylindrique et deux ouvertures d'entrée par lesquelles on injecte respectivement la charge d'hydrocarbures liquide et un gaz d'atomisation, généralement de la vapeur d'eau, à l'intérieur du corps. Une chambre de contact est ménagée à l'intérieur du corps, dans laquelle on met en contact la charge d'hydrocarbures et le gaz d'atomisation pour atomiser la charge d'hydrocarbures. Une fois atomisée, la charge d'hydrocarbures est éjectée via une ouverture de sortie débouchant à l'intérieur du réacteur. Chaque dispositif d'injection est implanté sur une paroi de réacteur de manière à ce qu'une extrémité du dispositif d'injection comprenant l'ouverture de sortie soit située à l'intérieur du réacteur.

Des charges de plus en plus lourdes sont actuellement traitées dans les unités de raffinage et tout particulièrement dans les unités FCC. L'atomisation de charges lourdes entraine une perte de charge importante au niveau des injecteurs, ce qui a pour conséquence d'augmenter la pression de la charge alimentant les injecteurs. Il faut alors utiliser des pompes puissantes et coûteuses pour atteindre les pressions souhaitées en sortie d'injecteur. Selon les configurations des dispositifs d'injection diphasiques, il peut en outre s'avérer nécessaire d'augmenter de manière considérable le débit de gaz d'atomisation pour atomiser des charges lourdes. Toutefois, injecter des quantités plus importantes de gaz d'atomisation augmente le coût global du traitement et peut en outre avoir un impact négatif sur le rendement des réactions en induisant des réactions parallèles non souhaitées, notamment lorsque le gaz d'atomisation est de la vapeur d'eau. C'est ainsi le cas lorsque de grandes quantités de vapeur d'eau sont injectées dans les réacteurs FCC. Il est donc préférable de ne pas augmenter le débit de gaz d'atomisation. En outre, l'injection de grandes quantités de vapeur d'eau nécessite un surdimensionnement des unités de séparation des effluents en aval de l'unité FCC, notamment pour condenser la vapeur d'eau, ce qui accroit les coûts de fabrication.

L'utilisation moindre de vapeur d'eau pour atomiser la charge permet de mieux gérer la répartition des flux de vapeur d'eau et de pouvoir en apporter un surplus dans des zones sensibles de l'unité FCC, par exemple dans les vannes où circulent du catalyseur ou encore pour accroitre la quantité de gaz de fluidisation en pied de riser (« gas lift ») pour faciliter la circulation du catalyseur.

Enfin, s'il est possible de travailler à plus basse pression, il est alors possible de diminuer les épaisseurs de métal lors de la fabrication des trains de préchauffe de la charge, donc de réduire les coûts de fabrication.

Par ailleurs, les dispositifs d'injection existants comportent une chambre de mélange complexe et coûteuse à réaliser.

Il existe un besoin pour des dispositifs d'injection qui permettent une atomisation efficace. Il existe également un besoin pour des dispositifs d'injection qui ne provoquent qu'une faible chute de la pression d'injection, permettant leur utilisation avec des charges lourdes sans avoir à augmenter le débit de gaz d'atomisation, ni la puissance des pompes utilisées. Il existe enfin un besoin pour des dispositifs d'injection qui soient moins complexes et coûteux à réaliser.

L'invention vise à pallier au moins en partie les inconvénients mentionnés ci-dessus. A cet effet, il est proposé un dispositif d'injection conformé pour atomiser un liquide en gouttelettes au moyen d'un gaz, comprenant un corps tubulaire creux s'étendant suivant une direction longitudinale et dont une paroi interne, notamment cylindrique, définit une première zone dite de contact et une deuxième zone située en aval de la première zone par rapport à un sens de circulation du liquide et du gaz à l'intérieur du corps, ce dernier présentant :
- au moins une ouverture d'entrée débouchant dans ladite première zone, pour injecter un liquide à l'intérieur de la première zone,
- au moins une ouverture d'entrée débouchant dans ladite première zone, pour injecter un gaz d'atomisation à l'intérieur de la première zone,
- au moins un orifice de sortie situé en aval des première et deuxième zones pour évacuer le liquide atomisé hors du corps.

Notamment, la deuxième zone peut présenter une longueur suivant la direction longitudinale de 2 à 10 fois supérieure à la longueur de la première zone.

Selon l'invention, le corps présente une section interne variant de manière continue ou constante sur toute sa longueur sauf à la jonction entre la première et la deuxième zone, où sa paroi interne comporte au moins une cavité augmentant la dimension de la section transversale interne du corps, ladite au moins une cavité s'étendant sur au moins une longueur prédéterminée suivant la direction longitudinale.

L'agencement particulier de l'invention permet d'atomiser de manière efficace le liquide injecté. Notamment, la présence d'une ou plusieurs cavités favorise la dispersion du liquide à l'intérieur du corps. En outre, le corps du dispositif selon l'injection peut être réalisé de manière très simple et peu coûteuse.

Le corps présente une section interne variant de manière continue, autrement dit sans variation brusque et sans épaulement, hormis au niveau de la jonction. Le corps peut ainsi présenter une forme tronconique, cylindrique, ou similaire. De préférence, le corps présente une section interne constante. Il peut s'agir par exemple d'un cylindre ou similaire.

Le corps peut avantageusement être réalisé d'une seule pièce.

Avantageusement, ladite longueur prédéterminée peut être au moins égale à une valeur de 0,05 à 1,2 fois la valeur de la dimension interne maximale du corps perpendiculairement à la direction longitudinale du corps. Ceci permet d'améliorer l'efficacité de la dispersion du liquide.

Avantageusement, ladite au moins une cavité peut s'étendre sur toute la périphérie du corps. Notamment, une unique cavité peut être prévue.

Avantageusement, ladite au moins une cavité pourra présenter une longueur variable le long de la périphérie du corps. Autrement dit, une même cavité peut présenter des parties de différentes longueurs.

Avantageusement, plusieurs cavités disjointes peuvent être prévues. Ceci permet de faciliter le mélange des fluides sans pour autant augmenter la perte de charge, ce qui peut être particulièrement avantageux pour des charges lourdes. Ces cavités disjointes peuvent notamment être de longueurs différentes.

Ces cavités peuvent être choisies parmi des cavités réparties sur la périphérie du corps et des cavités espacées suivant la direction longitudinale (X).

Ladite au moins une cavité peut présenter un profil longitudinal défini par au moins deux segments adjacents. Notamment, ce profil peut être défini par deux ou trois segment adjacents. Chaque cavité peut ainsi être réalisée de manière simple.

Dans un mode de réalisation, un segment d'extrémité situé du côté dudit au moins un orifice de sortie est linéaire et coupe la direction longitudinale X. Avantageusement, le segment coupe la direction longitudinale à angle droit.

En variante ou en combinaison, un segment adjacent à un segment d'extrémité situé du côté dudit au moins un orifice de sortie est choisi parmi un segment linéaire, un segment courbe concave de concavité dirigée vers l'intérieur du corps, un segment courbe convexe de convexité dirigée vers l'intérieur du corps. Ces agencements permettent de recentrer le flux de fluide vers le centre du corps tout en améliorant la dispersion.

Le profil de chaque cavité peut être défini par deux segments uniquement (un segment adjacent et un segment d'extrémité tels que définis ci-dessus) ou par trois segments. Dans ce dernier cas, un autre segment d'extrémité situé du côté des ouvertures d'entrée est prévu, ce dernier étant avantageusement linéaire.

De manière générale, la ou les cavités présentent une profondeur, mesurée perpendiculairement à la direction longitudinale du corps, depuis la paroi interne du corps, non nulle et inférieure à l'épaisseur de la paroi du corps. Avantageusement, cette profondeur est égale au plus à 1/2 de la dimension interne maximale du corps perpendiculairement à la direction longitudinale du corps. De préférence cette profondeur est égale au plus à 1/4 de la dimension interne maximale du corps, voire à 1/8^{ème} de cette dimension maximale, par exemple de l'ordre de 1/10^{ème} de cette dimension maximale. Cette profondeur peut en outre être variable pour une même cavité.

L'invention est maintenant décrite en référence aux dessins annexés, non limitatifs, dans lesquels :
- la figure 1 illustre une représentation schématique en coupe longitudinale d'un dispositif d'injection selon un mode de réalisation de l'invention ;
- la figure 2a est une vue en coupe selon la ligne AA d'une cavité de la figure 1 selon un mode de réalisation ;
- la figure 2b représente une vue en coupe longitudinale d'une cavité selon un mode de réalisation ;
- les figures 3 et 4 sont des vues en coupe similaires à celles de la figure 2a selon d'autres modes de réalisation ;
- les figures 5a-d sont des vues en coupe longitudinale de cavités selon d'autres modes de réalisation ;
- les figures 6 et 7 illustrent une représentation schématique en coupe longitudinale d'autres modes de réalisation d'un dispositif d'injection.

Sur les différentes figures, les éléments identiques portent les mêmes références.

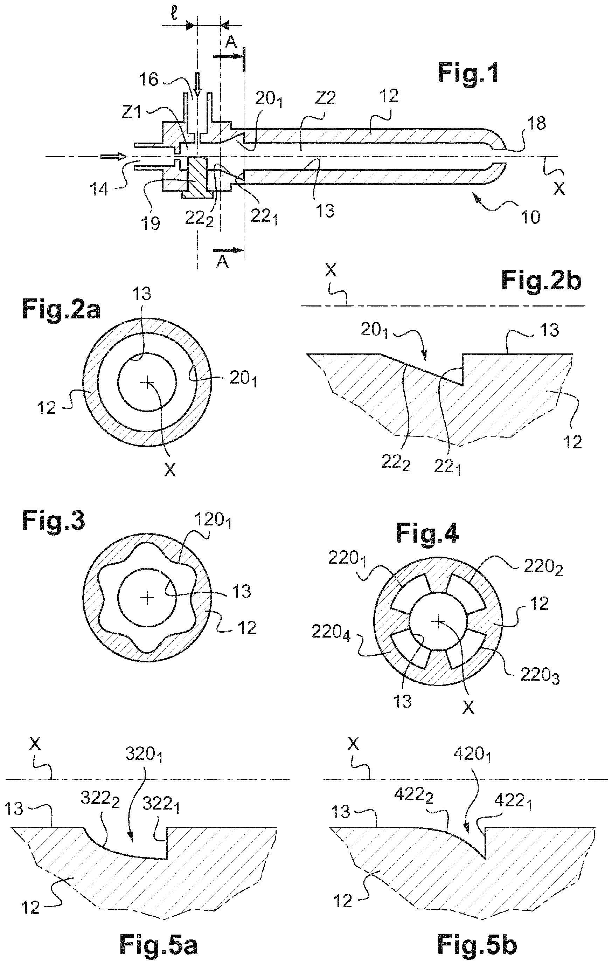

La figure 1 représente schématiquement un dispositif d'injection 10 lequel présente un corps tubulaire creux 12 s'étendant suivant une direction longitudinale X.

Le corps 12 comporte une paroi interne 13 laquelle définit une première zone Z1 dite de contact et une deuxième zone Z2 située en aval de la première zone Z1 par rapport à un sens de circulation du liquide et du gaz à l'intérieur du corps (ici de gauche à droite sur la figure 1).

Le dispositif d'injection 10 présente en outre :
- une ouverture d'entrée 14 débouchant dans la première zone Z1, pour injecter un gaz d'atomisation à l'intérieur de la première zone,
- une deuxième ouverture d'entrée 16 débouchant dans ladite première zone Z1 pour injecter un liquide à l'intérieur de la première zone,
- au moins un orifice de sortie 18 situé en aval des première et deuxième zones pour évacuer le liquide atomisé hors du corps.

La première ouverture 14 est ainsi destinée à être raccordée à un conduit d'alimentation d'un gaz, tandis que l'ouverture 16 est destinée à être raccordée à un conduit d'alimentation de liquide. On notera que la première ouverture 16 peut être en saillie à l'intérieur de la zone Z1.

Le dispositif d'injection 10 comprend en outre une cible 19 s'étendant en saillie de la paroi interne 13 dans la première zone Z1, en regard de l'ouverture 16 d'introduction du liquide et au travers du passage du gaz entrant par l'ouverture 14. Tel que visible sur la figure 1, la cible 19 s'étend ainsi dans l'axe de l'ouverture 16. L'axe de l'ouverture 16 correspond à la direction d'injection du liquide par l'ouverture 16. En général, cet axe est situé à équidistance des parois de cette ouverture 16, tel que visible figure 1. Les ouvertures sont généralement cylindriques, l'axe de l'ouverture correspond alors à l'axe de symétrie de l'ouverture 16. L'axe de l'ouverture 14 correspondant à la direction d'injection du gaz d'atomisation, est en général confondu avec l'axe du corps. Ainsi, par « axe d'une ouverture », on entend la direction d'injection du fluide destiné à être introduit par cette ouverture qui correspond à l'axe longitudinal de l'ouverture.

A l'intérieur du corps 12, les fluides circulent des ouvertures d'entrée 14-16 vers l'orifice de sortie 18.

Ici, la première zone Z1 et la deuxième zone Z2 se présentent sous la forme d'une conduite interne rectiligne reliant la première ouverture d'entrée 14 à l'orifice de sortie 18 suivant une direction axiale dudit corps. Cette conduite interne présente dans cet exemple un diamètre interne constant. L'invention n'est toutefois pas limitée par ce mode de réalisation. La section interne de cette conduite (autrement dit du corps) pourrait varier de manière continue ou être constante sur toute la longueur de la conduite (i.e. du corps), sans toutefois être circulaire.

Dans le mode de réalisation représenté, le corps 12 est un cylindre, autrement dit, la paroi interne 13 est ici cylindrique, d'axe confondu avec la direction longitudinale X du corps.

Le liquide est projeté contre la cible 19 dès son entrée dans la première zone Z1 par l'ouverture 16. Le jet de liquide éclate et est emporté sous forme de gouttelettes par un courant de gaz d'atomisation introduit par l'ouverture 14 à haute vitesse. L'atomisation du liquide dans ce type d'injecteur 10 s'effectue en deux fois. Une première partie de l'atomisation se produit au niveau de la cible 19 par un éclat du jet de liquide. La deuxième partie de l'atomisation se produit au niveau de l'orifice de sortie 18 de diamètre réduit, où le rétrécissement du diamètre accélère les fluides. Autrement dit, le dispositif d'injection est conformé pour atomiser un liquide en gouttelettes. A cet effet, de manière connue et tel que décrit ci-dessus, il présente un orifice de sortie de diamètre réduit par rapport aux dimensions du corps et un agencement particulier des orifices d'entrée du liquide et du gaz d'atomisation. Dans ce mode de réalisation particulier, la cible disposée en regard de l'ouverture d'entrée du liquide, dans l'axe de cette ouverture, participe également à l'atomisation.

Selon l'invention, le corps 12 présente une section interne variant de manière continue ou constante sur toute sa longueur sauf à la jonction entre la première et la deuxième zone Z1, Z2, où sa paroi interne 13 comporte au moins une cavité 20ᵢ (où i, le nombre de cavités, est un nombre entier non nul) augmentant la dimension de la section transversale interne du corps. La ou les cavités 20ᵢ s'étendent sur une longueur prédéterminée suivant la direction longitudinale.

Cette cavité, augmentant localement le diamètre de la paroi interne 13, perturbe le mouvement du fluide, favorisant le mélange. Notamment, la présence de cavité(s) permet d'éviter la formation d'un film de liquide sur la paroi en ramenant le liquide dans l'axe du flux de gaz.

Une ou plusieurs cavités peuvent être prévues.

Le dispositif d'injection 10 peut ainsi comprendre une unique cavité 20₁, tel que représenté figure 2a, située au niveau de la ligne de coupe A-A de la figure 1. Cette cavité 20₁ s'étend sur toute la périphérie de la paroi interne 13. Sa longueur (suivant la direction longitudinale X) est de 0,05 à 1,2 fois la valeur de la dimension interne maximale du corps perpendiculairement à la direction longitudinale du corps, autrement dit du diamètre interne du corps dans cet exemple.

Dans cet exemple, la cavité présente un profil longitudinal défini par deux segments adjacents 22₁, 22₂ tels que visible sur la figure 1 et sur la figure 2b. Un segment d'extrémité 22₁ est situé du côté de l'orifice de sortie 18. Il est ici linéaire et coupe la direction longitudinale suivant un angle droit. Le segment adjacent 22₂ relie le segment d'extrémité à la paroi interne 13. Ainsi, la profondeur de la cavité 20₁ (dimension mesurée perpendiculairement à la direction longitudinale, depuis la paroi interne 13), est croissante dans la direction de circulation du fluide (de gauche à droite sur les figures 1 et 2b). Le fluide suit ainsi la paroi interne 13, entre dans la cavité 20₁ en longeant le segment 22₂, puis, arrivé au bout de la cavité, il impacte le segment d'extrémité 22₁, ce qui crée des turbulences tout en le ramenant vers le centre du corps 12.

On notera en outre que la longueur de la cavité dépend de l'inclinaison du segment 22₂ par rapport à l'axe longitudinal X.

Les figures décrites ci-après représentent d'autres modes de réalisation qui diffèrent de ceux précédemment décrits par le nombre et/ou la forme des cavités. Sur ces figures, les cavités sont désignées par la référence « 20i » ou « J20i », l'indice « i », nombre entier non nul, représentant le nombre de cavités, des modes de réalisation différents de ceux précédemment décrits étant signalés par J (nombre entier de 1 à 5 dans les exemples).

Dans l'exemple représenté sur les figures 1, 2a, 2b, une unique cavité est représentée, dont la profondeur est constante sur toute la périphérie du corps (voir fig.2a).

L'invention n'est toutefois pas limitée à ce mode de réalisation particulier.

Notamment, la profondeur d'une cavité peut être variable sur la périphérie du corps. Ainsi, la figure 3 représente une cavité 120₁ dont la profondeur est variable sur sa périphérie.

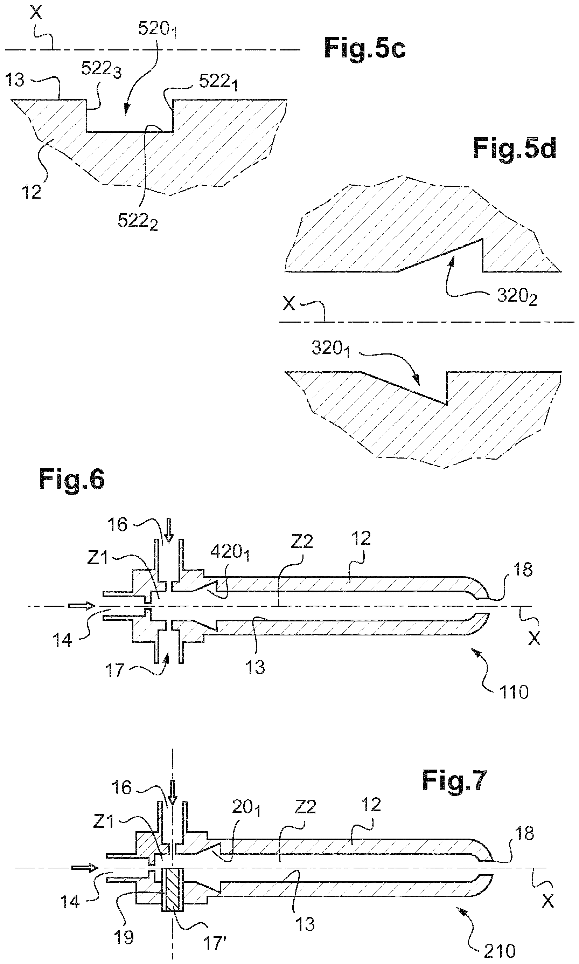

Le mode de réalisation de la figure 4 montre 4 cavités disjointes 220₁, 220₂, 220₃, 220₄, espacées radialement, autrement dit réparties sur la périphérie du corps 14. Le profil longitudinal de chaque cavité peut être tel que celui représenté figure 2b ou tel que ceux décrits ci-après en référence aux figures 5a, 5b et 5c. On peut également envisager des cavités disjointes présentant des profils longitudinaux différents.

Ainsi, la figure 5a représente un profil longitudinal d'une cavité 320₁ définie par deux segments adjacents 322₁, 322₂, comme dans l'exemple de la figure 2b. Ce mode de réalisation ne diffère de celui représenté sur la figure 2b que par la forme du segment adjacent 322₂ lequel présent une forme convexe dont la convexité est dirigée vers l'intérieur du corps 14.

La figure 5b représente un profil longitudinal d'une cavité 420₁ définie par deux segments adjacents 422₁, 422₂, comme dans l'exemple précédent. Ce mode de réalisation ne diffère du précédent que par la forme du segment adjacent 422₂ lequel présent une forme concave dont la concavité est dirigée vers l'intérieur du corps 14.

Dans l'exemple représenté sur la figure 5c, une cavité 520₁ est définie par trois segments adjacents 522₁, 522₂, 522₃. Chaque segment est ici linéaire, les deux segments d'extrémité 522₁, 522₃ étant perpendiculaires à la direction longitudinale, le segment central 522₂ étant parallèle à ce dernier. Bien entendu, ces trois segments pourraient ne pas être perpendiculaires les uns aux autres.

Dans l'exemple représenté sur la figure 5d, deux cavités distinctes, de même profil que celle représentée figure 2b, sont prévues : elles sont ici décalées suivant la direction longitudinale X.

On comprend ainsi qu'il est possible de moduler la forme de cavité, et/ou le nombre et la répartition des cavités afin d'améliorer la dispersion et/ou le recentrage du flux de fluide vers l'intérieur du corps.

Notamment, les différents segments linéaires décrits ci-dessus pourraient être remplacés par des segments courbes, ou les segments pourraient être reliés les uns aux autres par une courbure et non un angle vif.

Lorsque plusieurs cavités disjointes sont prévues, on pourra en outre prévoir qu'elles s'étendent non pas parallèlement à la direction longitudinale mais qu'elles suivent des directions hélicoïdales, ce qui peut permettre d'engendrer une rotation du flux à l'intérieur du corps.

Lorsque plusieurs cavités disjointes sont prévues, elles peuvent présenter des longueurs différentes. De manière similaire, une unique cavité peut présenter différentes longueurs.

Quelque soit le mode de réalisation, la ou les cavités peuvent présenter une dimension radiale ou profondeur (perpendiculairement à la direction longitudinale X) relativement faible, par exemple inférieure à 1/8^{ème} du diamètre de la paroi interne 13, voire de l'ordre de 1/10^{ème} de ce diamètre. Cette profondeur peut être différente d'une cavité à l'autre ou une même cavité peut avoir une profondeur variable, notamment longitudinalement.

Quelque soit le mode de réalisation, la ou les cavités sont disposées entre les première et deuxième zones Z1, Z2. La deuxième zone a une longueur (suivant la direction longitudinale X) de 2 à 10 fois supérieure à la longueur de la première zone. La ou les cavités peuvent être situées à une distance « 1 » de l'axe de l'ouverture 16 qui peut être d'au plus 5 fois ou 2 fois ou 1 fois la valeur de la dimension interne maximale de la section interne du corps (ici le diamètre), voire inférieure à la dimension interne maximale de la section interne du corps (ici le diamètre), au niveau de la première zone, par exemple à une distance correspondant à ¾ de cette dimension interne maximale (pour des raisons de clarté, l'échelle n'est pas respectée sur les figures). Notamment, un bord de la cavité situé du côté de l'ouverture 14 peut être situé à cette distance 1, tel que visible sur la figure 1.

Les cavités précédemment décrites peuvent être réalisées d'une pièce avec le corps 12, par exemple par moulage ou usinage.

Lorsque plusieurs cavités sont présentes, elles peuvent être identiques ou différentes, les différentes formes et dispositions de cavités précédemment décrites pouvant être combinées.

La présence de cavité(s) dans la paroi interne a été décrite en référence à un dispositif d'injection dit à impact. L'invention n'est toutefois pas limitée à ce type de dispositif d'injection particulier. D'autres dispositifs d'injection peuvent être utilisés, tels que ceux décrits en référence aux figures 6 et 7.

Ainsi, la figure 6 représente un dispositif d'injection 110 qui ne diffère de celui du mode de réalisation représenté figure 1 que par le fait que la cible 19 est remplacée par une ouverture 17 destinée à être raccordée à une conduite de liquide.

Les jets de liquide entrant par les ouvertures 16 et 17 sont projetés l'un vers l'autre et se percutent sur une ligne longitudinale s'étendant à l'intérieur du corps, ici l'axe longitudinal X. Dans l'exemple, les jets de liquide se percutent sensiblement au niveau du point I. Les jets de liquide éclatés sont emportés sous forme de gouttelettes par un courant de gaz d'atomisation introduit à haute vitesse par l'ouverture 14. L'atomisation du liquide s'effectue en deux fois. Une première partie de l'atomisation se produit au niveau du point I par impact des jets l'un contre l'autre. Les jets de liquide ainsi éclatés sont cisaillés par le gaz entrant introduit par l'ouverture 14. La deuxième partie de l'atomisation se produit au niveau de l'orifice de sortie 18 de diamètre réduit, où le rétrécissement du diamètre accélère les fluides. Autrement dit, le dispositif d'injection est conformé pour atomiser un liquide en gouttelettes. A cet effet, de manière connue et tel que décrit ci-dessus, il présente un orifice de sortie de diamètre réduit par rapport aux dimensions du corps et un agencement particulier des orifices d'entrée du liquide et du gaz d'atomisation. Dans le mode de réalisation décrit ci-après en référence à la figure 7, une cible est de plus située à l'intérieur de l'une des ouvertures d'entrée du liquide.

Dans l'exemple représenté, les deux ouvertures 16, 17 sont en regard l'une de l'autre (leurs axes sont confondus). On pourrait toutefois prévoir d'avantage d'ouvertures pour le liquide, par exemple 3 ou 4, voire plus, disposées de manière à ce que les jets de liquide se percutent sur l'axe X, dans le flux de gaz entrant par l'ouverture 14.

Ce type de dispositif d'injection est décrit dans le document WO2015/170034A.

Le dispositif d'injection 110 représenté figure 6 comporte une unique cavité 420₁, telle que celle décrite en référence à la figure 5b.

La figure 7 représente un dispositif d'injection 210 qui ne diffère de celui du mode de réalisation représenté figure 1 que par le fait que la cible 19 est entourée par une ouverture 17' destinée à être raccordée à une conduite de gaz.

## Revendications

1. Dispositif d'injection (10, 110, 210) conformé pour atomiser un liquide en gouttelettes au moyen d'un gaz, comprenant un corps tubulaire creux (12) s'étendant suivant une direction longitudinale (X) et dont une paroi interne (13) définit une première zone dite de contact (Z1) et une deuxième zone (Z2) située en aval de la première zone par rapport à un sens de circulation du liquide et du gaz à l'intérieur du corps, cette deuxième zone (Z2) présentant une longueur suivant la direction longitudinale (X) de 2 à 10 fois supérieure à la longueur de la première zone (Z1), le corps présentant :
- au moins une ouverture d'entrée (16, 17) débouchant dans ladite première zone (Z1), pour injecter un liquide à l'intérieur de la première zone,
- au moins une ouverture d'entrée (14) débouchant dans ladite première zone (Z1), pour injecter un gaz d'atomisation à l'intérieur de la première zone,
- au moins un orifice de sortie (18) situé en aval des première et deuxième zones pour évacuer le liquide atomisé hors du corps, **caractérisé en ce que** le corps présente une section interne variant de manière continue ou constante sur toute sa longueur sauf à la jonction entre la première et la deuxième zone, où sa paroi interne (13) comporte au moins une cavité (20ᵢ, 120ᵢ, 220ᵢ, 320ᵢ, 420ᵢ, 520ᵢ, où i nombre entier non nul représentant le nombre de cavités) augmentant la dimension de la section transversale interne du corps, ladite au moins une cavité s'étendant sur au moins une longueur prédéterminée suivant la direction longitudinale.

2. Dispositif d'injection (10, 110, 210) selon la revendication 1, **caractérisé en ce que** ladite longueur prédéterminée est au moins égale à une valeur de 0,05 à 1,2 fois la valeur de la dimension interne maximale du corps perpendiculairement à la direction longitudinale du corps.

3. Dispositif d'injection (10, 110, 210) selon l'une quelconque des revendications 1 ou 2, **caractérisé en ce que** ladite au moins une cavité (20ᵢ, 120ᵢ, 420ᵢ, 520ᵢ) s'étend sur toute la périphérie du corps.

4. Dispositif d'injection (10, 110, 210) selon l'une quelconque des revendications 1 à 3, **caractérisé en ce que** plusieurs cavités (220ᵢ, 320ᵢ) disjointes choisies parmi des cavités réparties sur la périphérie du corps et des cavités espacées suivant la direction longitudinale (X).

5. Dispositif d'injection (10, 110, 210) selon l'une quelconque des revendications 1 à 4, **caractérisé en ce que** ladite au moins une cavité (20ᵢ, 120ᵢ, 220ᵢ, 320ᵢ, 420ᵢ, 520ᵢ) présente un profil longitudinal défini par au moins deux segments adjacents (22₁, 22₂, 322₁, 322₂, 422₁, 422₂, 522₁, 522₂, 522₃).

6. Dispositif d'injection (10, 110, 210) selon la revendication 5, **caractérisé en ce qu'**un segment d'extrémité (22₁, 322₁, 422₁, 522₁) situé du côté dudit au moins un orifice de sortie est linéaire et coupe la direction longitudinale (X), notamment suivant un angle droit.

7. Dispositif d'injection (10, 110, 210) selon la revendication 5 ou 6, **caractérisé en ce qu'**un segment adjacent (22₂, 322₂, 422₂, 522₂) à un segment d'extrémité situé du côté dudit au moins un orifice de sortie est choisi parmi un segment linéaire, un segment courbe concave de concavité dirigée vers l'intérieur du corps, un segment courbe convexe de convexité dirigée vers l'intérieur du corps.

8. Dispositif d'injection (10, 110, 210) selon la revendication 7, **caractérisé en ce que** ledit profil est formé dudit segment d'extrémité (22₁, 322₁, 422₁, 522₁) et dudit segment adjacent (22₂, 322₂, 422₂, 522₂).

9. Dispositif d'injection (10, 110, 210) selon l'une quelconque des revendications 1 à 8, **caractérisé en ce que** ladite au moins une cavité (20ᵢ, 120ᵢ, 220ᵢ, 320ᵢ, 420ᵢ, 520ᵢ) présente une profondeur, mesurée perpendiculairement à la direction longitudinale du corps, non nulle et inférieure à l'épaisseur de la paroi du corps, égale au plus à 1/2 d'une dimension interne maximale du corps perpendiculairement à la direction longitudinale du corps, de préférence égale au plus à ¼ de cette dimension interne maximale, davantage de préférence égale au plus à 1/8^{ème} de cette dimension interne maximale.

## Patentansprüche

1. Injektionsvorrichtung (10, 110, 210), die ausgebildet ist, um eine Flüssigkeit mittels eines Gases in Tröpfchen zu zerstäuben, die einen hohlen rohrförmigen Körper (12) umfasst, der sich entlang einer Längsrichtung (X) erstreckt, und von der eine Innenwand (13) eine erste sogenannte Kontaktzone (Z1) und eine zweite Zone (Z2) definiert, die stromabwärts der ersten Zone in Bezug auf eine Zirkulationsrichtung der Flüssigkeit und des Gases in dem Inneren des Körpers liegt, wobei diese zweite Zone (Z2) eine um das 2- bis 10-Fache größere Länge in die Längsrichtung (X) als die Länge der ersten Zone (Z1) aufweist, wobei der Körper aufweist:
- mindestens eine Eintrittsöffnung (16, 17), die in der ersten Zone (Z1) mündet, zum Einspritzen einer Flüssigkeit in die erste Zone,
- mindestens eine Eintrittsöffnung (14), die in der ersten Zone (Z1) mündet, um ein Zerstäubungsgas in das Innere der ersten Zone einzuspritzen,
- mindestens eine Austrittsöffnung (18), die stromabwärts der ersten und der zweiten Zone liegt, um die zerstäubte Flüssigkeit aus dem Körper austreten zu lassen,
**dadurch gekennzeichnet, dass** der Körper einen Innenquerschnitt aufweist, der über seine gesamte Länge kontinuierlich oder konstant variiert, außer an der Verbindungsstelle zwischen der ersten und der zweiten Zone, wo seine Innenwand (13) mindestens einen Hohlraum (20ᵢ, 120ᵢ, 220ᵢ, 320ᵢ, 420ᵢ, 520ᵢ, wobei i, eine Ganzzahl ungleich null, die Anzahl von Hohlräumen darstellt) aufweist, der das Maß des Innenquerschnitts des Körpers vergrößert, wobei sich der mindestens eine Hohlraum über mindestens eine vorbestimmte Länge in die Längsrichtung erstreckt.

2. Injektionsvorrichtung (10, 110, 210) nach Anspruch 1, **dadurch gekennzeichnet, dass** die vorbestimmte Länge mindestens gleich einem Wert ist, der gleich dem 0,05- bis 1,2-Fachen des Werts des maximalen Innenmaßes des Körpers senkrecht zu der Längsrichtung des Körpers ist.

3. Injektionsvorrichtung (10, 110, 210) nach einem der Ansprüche 1 oder 2, **dadurch gekennzeichnet, dass** sich der mindestens eine Hohlraum (20ᵢ, 120ᵢ, 420ᵢ, 520ᵢ) über den gesamten Umfang des Körpers erstreckt.

4. Injektionsvorrichtung (10, 110, 210) nach einem der Ansprüche 1 bis 3, **dadurch gekennzeichnet, dass** mehrere getrennte Hohlräume (220ᵢ, 320ᵢ), die aus den Hohlräumen, die auf dem Umfang des Körpers verteilt sind, und Hohlräumen, die entlang der Längsrichtung (X) beabstandet sind, ausgewählt sind.

5. Injektionsvorrichtung (10, 110, 210) nach einem der Ansprüche 1 bis 4, **dadurch gekennzeichnet, dass** der mindestens eine Hohlraum (20ᵢ, 120ᵢ, 220ᵢ, 320ᵢ, 420ᵢ, 520ᵢ) ein Längsprofil aufweist, das von mindestens zwei angrenzenden Segmenten (22₁, 22₂, 322₁, 322₂, 422₁, 422₂, 522₁, 522₂, 522₃) definiert ist.

6. Injektionsvorrichtung (10, 110, 210) nach Anspruch 5, **dadurch gekennzeichnet, dass** ein Endsegment (22₁, 322₁, 422₁, 522₁), das auf der Seite der mindestens einen Austrittsöffnung liegt, linear ist und die Längsrichtung (X) insbesondere in einem rechten Winkel schneidet.

7. Injektionsvorrichtung (10, 110, 210) nach Anspruch 5 oder 6, **dadurch gekennzeichnet, dass** ein Segment (22₂, 322₂, 422₂, 522₂), das an ein Endsegment angrenzt, das auf der Seite der mindestens einen Austrittsöffnung liegt, aus einem linearen Segment, einem gekrümmten Segment mit Konkavität, die dem Inneren des Körpers zugewandt ist, und einem gekrümmten Segment, dessen Konvexität dem Inneren des Körpers zugewandt ist, ausgewählt ist.

8. Injektionsvorrichtung (10, 110, 210) nach Anspruch 7, **dadurch gekennzeichnet, dass** das Profil aus dem Endsegment (22₁, 322₁, 422₁, 522₁) und dem angrenzenden Segment (22₂, 322₂, 422₂, 522₂) gebildet ist.

9. Injektionsvorrichtung (10, 110, 210) nach einem der Ansprüche 1 bis 8, **dadurch gekennzeichnet, dass** der mindestens eine Hohlraum (20ᵢ, 120ᵢ, 220ᵢ, 320ᵢ, 420ᵢ, 520ᵢ) eine Tiefe, senkrecht zu der Längsrichtung des Körpers gemessen aufweist, die nicht null und kleiner als die Dicke der Wand des Körpers, höchstens gleich 1/2 eines maximalen Innenmaßes des Körpers senkrecht zu der Längsrichtung des Körpers, bevorzugt höchstens gleich ¼ dieses maximalen Innenmaßes, bevorzugter höchstens gleich maximal 1/8 dieser maximalen Innenabmessung ist.

## Claims

1. An injection device (10, 110, 210) configured to atomise a liquid into droplets by means of a gas, comprising a hollow tubular body (12) extending in a longitudinal direction (X) and of which an internal wall (13) defines a first so-called contact zone (Z1) and a second zone (Z2) located downstream of the first zone with respect to a direction of circulation of the liquid and the gas inside the body, this second zone (Z2) having a length in the longitudinal direction (X) that is 2 to 10 times greater than the length of the first zone (Z1), the body having:
- at least one inlet opening (16, 17) that opens into said first zone (Z1), for injecting a liquid inside the first zone,
- at least one inlet opening (14) that opens into said first zone (Z1), for injecting an atomising gas inside the first zone,
- at least one outlet orifice (18) located downstream of the first and second zones for removing the atomised liquid from the body,
**characterised in that** the body has an internal section varying continuously or constantly over its entire length except at the junction between the first and the second zone, wherein its internal wall (13) comprises at least one cavity (20ᵢ, 120ᵢ, 220ᵢ, 320ᵢ, 420ᵢ, 520ᵢ, wherein i is a non-zero integer representing the number of cavities) increasing the dimension of the internal cross-section of the body, said at least one cavity extending over at least a predetermined length in the longitudinal direction.

2. An injection device (10, 110, 210) according to claim 1, **characterised in that** said predetermined length is at least equal to a value of 0.05 to 1.2 times the value of the maximum internal dimension of the body perpendicular to the longitudinal direction of the body.

3. An injection device (10, 110, 210) according to any one of claims 1 or 2, **characterised in that** said at least one cavity (20ᵢ, 120ᵢ, 420ᵢ, 520ᵢ) extends along the entire periphery of the body.

4. An injection device (10, 110, 210) according to any one of claims 1 to 3, **characterised in that** several disjoint cavities (220ᵢ, 320ᵢ) chosen from cavities distributed along the periphery of the body and cavities spaced in the longitudinal direction (X).

5. An injection device (10, 110, 210) according to any one of claims 1 to 4, **characterised in that** said at least one cavity (20ᵢ, 120ᵢ, 220ᵢ, 320ᵢ, 420ᵢ, 520ᵢ) has a longitudinal profile defined by at least two adjacent segments (22₁, 22₂, 322₁, 322₂, 422₁, 422₂, 522₁, 522₂, 522₃).

6. An injection device (10, 110, 210) according to claim 5, **characterised in that** an end segment (22₁, 322₁, 422₁, 522₁) located on the side of said at least one outlet orifice is linear and intersects the longitudinal direction (X), in particular at a right angle.

7. An injection device (10, 110, 210) according to claim 5 or 6, **characterised in that** an adjacent segment (22₂, 322₂, 422₂, 522₂) to an end segment located on the side of said at least one outlet orifice is chosen from a linear segment, a concave curved segment with the concavity directed towards the inside of the body, a convex curved segment with the convexity directed towards the inside of the body.

8. An injection device (10, 110, 210) according to claim 7, **characterised in that** said profile is formed of said end segment (22₁, 322₁, 422₁, 522₁) and said adjacent segment (22₂, 322₂, 422₂, 522₂).

9. An injection device (10, 110, 210) according to any one of claims 1 to 8, **characterised in that** said at least one cavity (20ᵢ, 120ᵢ, 220ᵢ, 320ᵢ, 420ᵢ, 520ᵢ) has a depth, measured perpendicular to the longitudinal direction of the body, that is not zero and is less than the thickness of the wall of the body, equal to at most 1/2 of a maximum internal dimension of the body perpendicular to the longitudinal direction of the body, preferably equal to at most ¼ of this maximum internal dimension, more preferably at most equal to 1/8^{th} of this maximum internal dimension.
